# DEMANDE DE BREVET EUROPEEN

(11) **EP 0 653 861 A1**
(43) Date de publication de la demande: **17.05.1995**
(21) Numéro de dépôt: 94410100.5
(22) Date de dépôt: 15.11.1994
(51) Int. Cl.: H04L 7/033

(54) **Circuit d'acquisition du signal d'échantillonnage dans un modem**

(30) Priorité: 17.11.1993 FR 9314011
(71) Demandeur: SGS-THOMSON MICROELECTRONICS S.A., F-94250 Gentilly (FR)
(72) Inventeur: Glass, William, F-38170 Seyssinet-Pariset (FR)
(74) Mandataire: de Beaumont, Michel

(57) **Abrégé**

L'invention concerne un système de récupération de signal d'horloge d'échantillonnage dans un modem comprenant une mémoire tampon d'entrée (10) mémorisant autant de valeurs numériques de sortie du convertisseur qu'il y a d'échantillons dans un baud ; un filtre de réception (12) ; une boucle de phase pour régler l'oscillateur en fonction de la phase du signal d'entrée (TSIG) détecté par un filtre d'échantillonnage (31) ; des moyens (31) disposés à l'entrée de la boucle de phase, pour déterminer si le décalage entre la phase reçue et la phase recherchée est compris dans l'une ou l'autre de plusieurs plages de fréquence ; des moyens (32) pour rajouter à la valeur de décalage une constante correspondant à la plage de fréquence déterminée ; des moyens (30) disposés à l'entrée du circuit de réception, pour décaler l'ordre d'analyse des données mémorisées dans la mémoire tampon d'entrée (10) en fonction du décalage susmentionné.

## Description

La présente invention concerne le domaine des modems numériques et plus particulièrement l'opération de récupération de signal d'échantillonnage dans un modem.

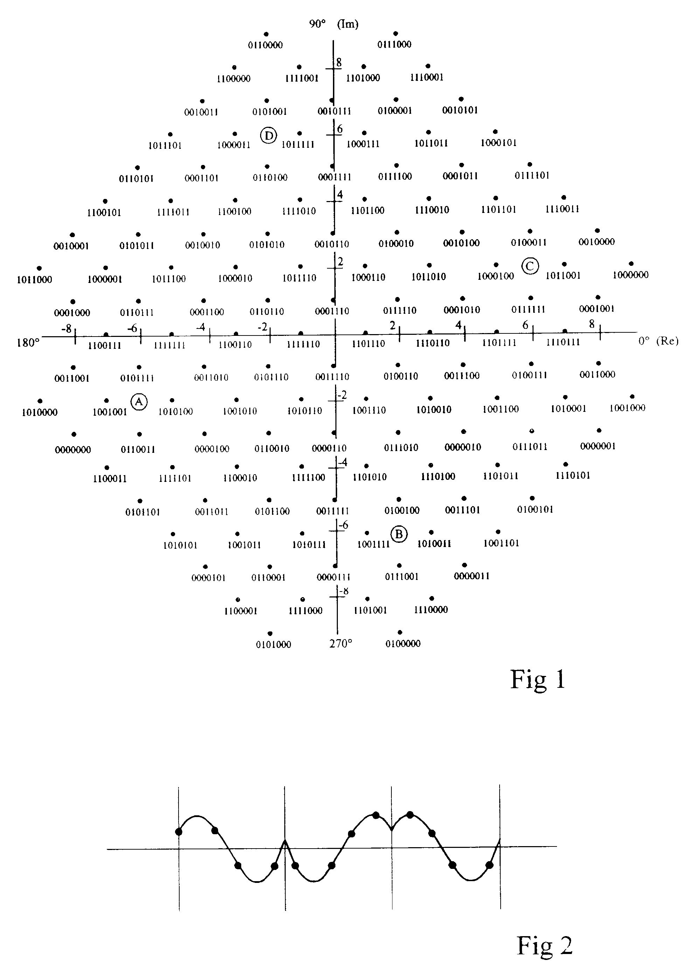

Dans un modem numérique, les données à transmettre sont codées sous forme numérique à partir d'un certain nombre de symboles puis transmises sous forme de portions de signal sinusoïdal modulées en phase et en amplitude. Les divers symboles, par exemple 128 dans la norme V32bis correspondront chacun à un signal de phase et d'amplitude déterminées. Pour illustrer cette conversion, on peut disposer les symboles en une constellation telle qu'illustrée en figure 1 où chaque symbole est placé en un point correspondant à la phase et à l'amplitude de modulation du signal qui le traduit. Ainsi, comme le représente la figure 2, chaque symbole sera émis sous forme d'une portion de sinusoïde ou baud à une fréquence de, par exemple, 2400 hertz et l'onde sinusoïdale est formée et décodée à partir d'une fréquence d'échantillonnage plus élevée que la fréquence de chaque portion de sinusoïde et multiple de celle-ci, par exemple 9600 hertz. Dans ce cas, chaque portion de sinusoïde est échantillonnée quatre fois.

A la réception, pour que la phase des signaux reçus soit convenable, il faut que la fréquence d'échantillonnage à la réception soit convenablement ajustée et il convient de retrouver cette phase à partir du signal reçu.

Pour simplifier cette opération, lors de la mise en communication de deux modems, on émet d'abord des signaux d'apprentissage prédéterminés et le modem récepteur cherche à reconnaître ces signaux. Par exemple, en se référant à la constellation illustrée en figure 1, on émettra des séquences de signaux A-B-A-B...

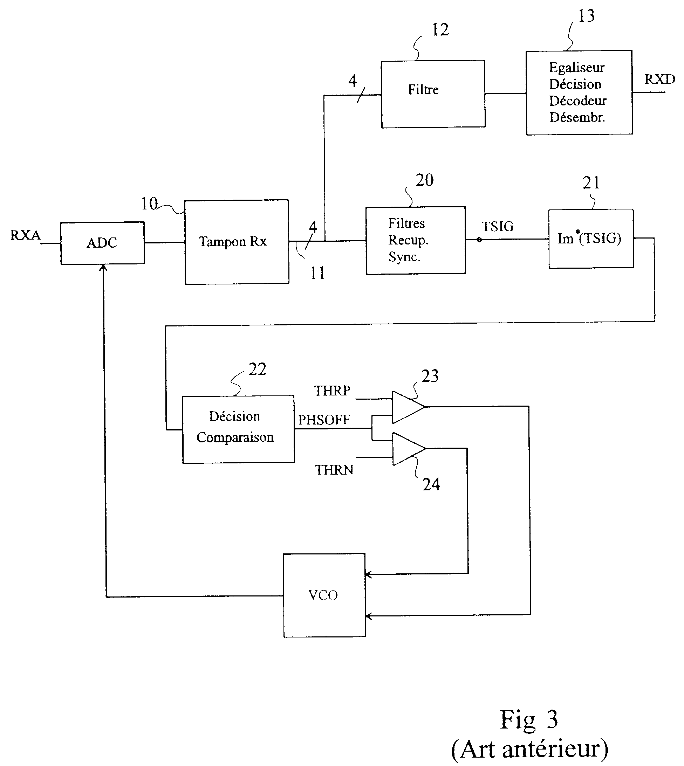

Un circuit classique de récupération de période d'échantillonnage est illustré en figure 3. Un signal reçu analogique RXA arrive sur une entrée d'un convertisseur analogique/numérique ADC qui est rythmé par le signal de sortie d'un oscillateur à fréquence commandée VCO. On obtient donc à la sortie du convertisseur analogique/numérique des valeurs numériques qui se succèdent au rythme de la fréquence fournie par l'oscillateur VCO. Dans le cas où la fréquence d'échantillonnage est le quadruple de la fréquence de bauds, quatre valeurs numériques successives de sortie du convertisseur ADC sont stockées dans une mémoire tampon 10 dont quatre sorties sont simultanément disponibles sur un bus 11. Ces quatre valeurs sont traitées par un filtre récepteur 12 qui est utilisé pour éliminer le bruit hors bande et pour convertir les informations contenues dans les échantillons successifs en une valeur complexe. Après cela, le signal est envoyé à des circuits 13 assurant les fonctions :
d'égaliseur pour compenser l'atténuation et le retard de groupe de la ligne téléphonique (généralement la sortie de l'égaliseur consiste en un échantillon complexe par baud),
de circuit de décision ou "slicer" pour réaliser des décisions sur l'amplitude et la phase des échantillons complexes en faisant référence à une table mémorisée de valeurs attendues, correspondant à la constellation illustrée en figure 1,
de décodeur, et
de désembrouilleur (descrambler).

On obtient ainsi en sortie des données RXD qui correspondent sous forme numérique aux données reçues et qui sont par exemple sous forme des suites de bits indiqués dans la constellation de la figure 1.

Bien entendu, puisque chaque baud RXA porte de nouvelles informations de phase et d'amplitude, il est important de toujours échantillonner le signal de réception analogique par l'intermédiaire de l'horloge d'échantillonnage à des intervalles de temps fixes par rapport au début du baud. Il en résulte qu'il faut disposer d'une relation de phase et de fréquence fixe de l'horloge d'échantillonnage de réception par rapport à l'horloge d'échantillonnage d'émission du modem éloigné. Comme cette information n'est pas connue du récepteur, elle doit être directement acquise à partir d'informations du signal reçu.

Ainsi, une boucle de récupération d'horloge d'échantillonnage est placée en parallèle sur le filtre de réception 12. Cette boucle a pour but de verrouiller la fréquence et la phase d'un générateur d'horloge local VCO par rapport aux informations de baud reçues. Ceci est effectué par l'intermédiaire de filtres de récupération de synchronisation 20 et d'une boucle à verrouillage de phase. A la sortie du filtre 20, on récupère le signal de synchronisation TSIG et un bloc 21 détermine la partie imaginaire, c'est-à-dire la phase, de ce signal. Ce signal est envoyé dans un bloc de décision et de comparaison 22 qui détermine le décalage de phase du signal TSIG par rapport à la phase du signal du VCO pour la séquence A-B-A-B... susmentionnée. Le signal de décalage de phase est utilisé par l'intermédiaire d'un comparateur à un seuil positif 23 ou d'un comparateur à un seuil négatif 24 pour ajuster la fréquence de l'oscillateur VCO.

Ce qui a été résumé précédemment, et notamment le bloc de décision et de comparaison qui peut être considéré comme une boucle à verrouillage de phase numérique, est décrit en détail notamment dans l'ouvrage "Digital Communication" de Edward A. Lee et David G. Messerschmidt édité par Kluwer Academic Publishers, quatrième édition, 1992.

L'inconvénient de ce système classique est que, si la phase déduite du signal TSIG est très éloignée de la phase attendue, le système mettra un temps relativement long à se boucler si l'ajustement de phase/fréquence du VCO est réalisé par incréments. Si, pour tenter de remédier à cet inconvénient, on produit, dans une phase initiale, un saut brutal de phase/fréquence du VCO, ce sont les filtres 12, 20 qui mettront un certain temps à se stabiliser. En effet, dans un filtre numérique, comme dans un filtre analogique, il existe une certaine constante de temps. Or, on cherche actuellement à réduire au maximum la durée de la phase d'apprentissage et donc la durée de la séquence de signaux A-B-A-B... susmentionnée.

La présente invention vise à remédier à cet inconvénient.

Pour atteindre cet objet, la présente invention prévoit un système de récupération de signal d'échantillonnage dans un modem comprenant un convertisseur analogique/numérique d'entrée échantillonnant les bauds reçus au rythme d'un oscillateur ; une mémoire tampon d'entrée mémorisant autant de valeurs numériques de sortie du convertisseur qu'il y a d'échantillons dans un baud ; un filtre de réception suivi d'un ensemble égaliseur, circuit de décision, décodeur, désembrouilleur, pour fournir à partir des données contenues dans le registre tampon les valeurs numériques à recevoir ; et une boucle constituant un circuit de verrouillage de phase pour régler l'oscillateur en fonction de la phase du signal d'entrée détecté par un filtre d'échantillonnage. Ce système comprend des moyens disposés à l'entrée de la boucle de verrouillage de phase, pour déterminer si le décalage entre la phase reçue et la phase recherchée est compris dans l'une ou l'autre de plusieurs plages de fréquence ; des moyens pour rajouter à la valeur de décalage une constante correspondant à la plage de fréquence déterminée ; et des moyens disposés à l'entrée du circuit de réception, pour décaler l'ordre d'analyse des données mémorisées dans la mémoire tampon d'entrée en fonction du décalage susmentionné.

Selon un mode de réalisation de la présente invention, les moyens disposés à l'entrée du circuit de réception comprennent un registre dans lequel est recopié le contenu de la mémoire tampon d'entrée.

Selon un mode de réalisation de la présente invention, les moyens pour rajouter comprennent un multiplieur de valeurs complexes, la valeur constante multiplicative ayant la forme e^{jkΠ/n}, où n correspond au nombre de plages sélectionnées et k à la plage identifiée.

Ces objets, caractéristiques et avantages ainsi que d'autres de la présente invention sont exposés en détail dans la description suivante de modes de réalisation particuliers faite, à titre purement illustratif, en relation avec les figures jointes parmi lesquelles :
la figure 1 représente une constellation de symboles utilisés dans un modem ;
la figure 2 représente des séquences de bauds analogiques transmis entre deux modems ;
la figure 3 représente un schéma de système de récupération de signal d'horloge d'échantillonnage selon l'art antérieur ;
la figure 4 représente un système de récupération d'horloge d'échantillonnage selon la présente invention ;
la figure 5 illustre la fonction réalisée par un circuit de décision utilisé dans un système selon l'invention ; et
la figure 6 représente sous forme de tableau les actions exécutées par un circuit de décision utilisé dans un système selon l'invention.

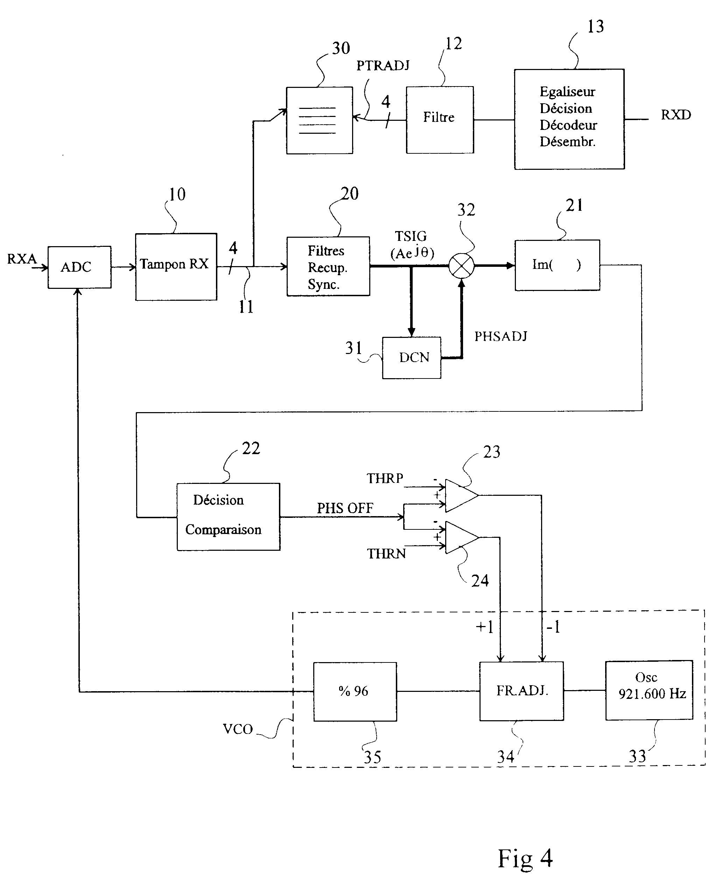

En figure 4, de mêmes éléments qu'en figure 3 sont désignés par de mêmes références numériques ou de mêmes notations.

Par rapport au schéma de la figure 3, le schéma de la figure 4 comprend en plus, dans la chaîne de réception, un étage tampon intermédiaire 30 dans lequel est recopié le contenu du tampon 10 mais dont l'ordre de lecture des sorties peut être décalé de façon souhaitée par un pointeur par rapport à l'ordre d'écriture des entrées. Un circuit de décision 31 permet de comparer initialement, pendant la phase d'apprentissage, la phase du signal de synchronisation obtenue en sortie du filtre 20 à des valeurs mémorisées. Le résultat de cette décision est inséré dans un multiplieur numérique 32 introduisant un déphasage déterminé de la façon exposée ci-après.

En outre, dans le circuit de la figure 4, on a détaillé un exemple de structure du VCO. Ce VCO comprend un oscillateur à haute fréquence 33, oscillant par exemple à une fréquence de 921600 hertz, suivi d'un bloc de décalage de fréquence 34 permettant de décaler la fréquence de plus ou moins une unité, c'est-à-dire de rajouter ou de soustraire une impulsion à chaque train d'impulsions émis, puis un diviseur 35, ici un diviseur par 96, permettant de fournir à partir de la fréquence haute la fréquence d'échantillonnage souhaitée, ici 9600 hertz.

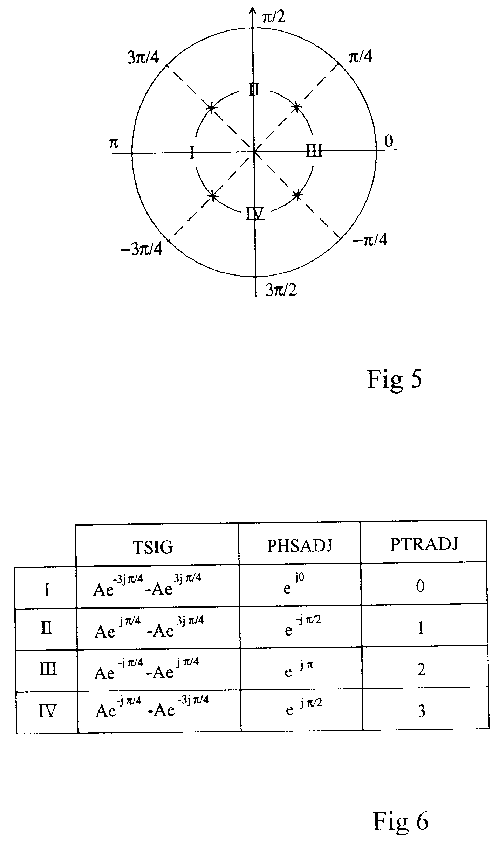

Le fonctionnement de ce circuit va être exposé ci-après. Tout d'abord, le circuit de décision 31, comme l'illustre la figure 5, détermine si le déphasage entre le signal TSIG et une valeur normale prémémorisée est compris dans l'une ou l'autre de quatre zones I, II, III et IV. La zone I correspond à un décalage souhaité, ici de l'ordre de 180° à ± 45° près, la zone II étant décalée de +90° par rapport à la zone I, la zone III de 180° par rapport à la zone I et la zone IV de -90° par rapport à la zone I.

Dans le cas où l'on est dans la zone I, le signal TSIG, de la forme Ae^{jϑ}, est voisin de Ae^{jΠ}, ce que l'on souhaite. En conséquence le circuit de décision ne fournit pas de signal d'ajustement au multiplieur complexe 32 qui a une fonction de déphaseur, c'est-à-dire qu'il fournit un signal e^{j0}=1. De même le pointeur commandant le décalage entrée/sortie du registre 30 est tel qu'il n'y a pas de décalage. Dans ce cas, le circuit selon l'invention fonctionne exactement comme le circuit classique illustré en figure 3 et la boucle de régulation doit compenser un déphasage compris entre +45° et -45°.

Par contre, si l'on se trouve dans l'une ou l'autre des zones II, III et IV, le circuit de décision 31 enverra un signal d'ajustement de phase (PHSADJ) au déphaseur 32, propre à ramener le signal dans la zone I. Concomitamment, un signal d'ajustement de pointeur de réception (PTRADJ) sera appliqué au registre 30 pour décaler le rang de sa sortie par rapport à son entrée. Le tableau de la figure 6 indique les actions du circuit 31 selon que l'on se trouve dans la zone I, II, III ou IV. La première colonne indique la plage de valeur dans laquelle se trouve le signal TSIG, la deuxième colonne le signal d'ajustement de phase PHSADJ envoyé au multiplieur 32, et la troisième colonne le signal d'ajustement de pointeur PTRADJ envoyé au pointeur de sortie du tampon 30.

Grâce à ce système, le circuit de décision et de comparaison 22 fournira un signal d'erreur PHSOFF qui sera au plus de l'ordre de ±45° par rapport à la phase idéale et ainsi le rattrapage de phase/fréquence pourra être effectué beaucoup plus rapidement qu'avec un circuit selon l'art antérieur. De plus, la remise en phase du signal TSIG n'est pas répercutée par un déphasage brutal du signal de sortie du VCO et n'affecte donc pas le fonctionnement du filtre 20.

Bien entendu, alors que les explications précédentes ont été données par souci de clarté en utilisant un vocabulaire qui correspond parfois à un fonctionnement analogique, il sera clair pour l'homme de métier que, à partir du moment où l'on se trouve à la sortie du circuit ADC, les signaux sont tous des signaux numériques et que les constituants du circuit illustré sous forme matérielle correspondront souvent en pratique à des réalisations logicielles.

Des calculs pratiques montrent que le système selon la présente invention permet de réduire environ d'un facteur au moins égal à 2 la durée de réglage initiale de la fréquence d'échantillonnage. On pourra donc utiliser la période d'apprentissage à effectuer d'autres tâches utiles dans les modems modernes ou réduire la période d'apprentissage pour satisfaire à de nouvelles exigences des clients.

Bien que la présente invention ait été décrite en relation avec la récupération d'horloge lors d'une phase initiale de communication entre deux modems, elle s'applique également à la synchronisation d'horloge en cours de communication, ou lors de phases de remises à jour, par exemple quand on décide de modifier le type de communication dans des conditions où des parasites importants surviennent (ou disparaissent).

## Revendications

1. Système de récupération de signal d'horloge d'échantillonnage dans un modem comprenant :
un convertisseur analogique/numérique d'entrée (ADC) échantillonnant les bauds reçus au rythme d'un oscillateur (33-35) ;
une mémoire tampon d'entrée (10) mémorisant autant de valeurs numériques de sortie du convertisseur qu'il y a d'échantillons dans un baud ;
un filtre de réception (12) suivi d'un ensemble (13) égaliseur, circuit de décision, décodeur, désembrouilleur, pour fournir à partir des données contenues dans le registre tampon les valeurs numériques (RXD) à recevoir ;
une boucle constituant un circuit de verrouillage de phase pour régler l'oscillateur en fonction de la phase du signal d'entrée (TSIG) détecté par un filtre d'échantillonnage (31) ;
caractérisé en ce qu'il comprend :
des moyens (31) disposés à l'entrée de la boucle de verrouillage de phase, pour déterminer si le décalage entre la phase reçue et la phase recherchée est compris dans l'une ou l'autre de plusieurs plages de fréquence ;
des moyens (32) pour rajouter à la valeur de décalage une constante correspondant à la plage de fréquence déterminée ;
des moyens (30) disposés à l'entrée du circuit de réception, pour décaler l'ordre d'analyse des données mémorisées dans la mémoire tampon d'entrée (10) en fonction du décalage susmentionné.

2. Système de récupération de signal d'horloge d'échantillonnage selon la revendication 1, caractérisé en ce que les moyens (30) disposés à l'entrée du circuit de réception comprennent un registre (30) dans lequel est recopié le contenu de la mémoire tampon d'entrée (10).

3. Système de récupération de signal d'horloge d'échantillonnage selon la revendication 1, caractérisé en ce que les moyens (32) pour rajouter comprennent un multiplieur de valeurs complexes, la valeur constante multiplicative ayant la forme e^{jkΠ/n}, où n correspond au nombre de plages sélectionnées et k à la plage identifiée.
